# EUROPÄISCHE PATENTSCHRIFT

(11) **EP 3 519 102 B1**
(45) Veröffentlichungstag und Bekanntmachung des Hinweises auf die Patenterteilung: **17.04.2024**
(21) Anmeldenummer: 17777029.4
(22) Anmeldetag: 28.09.2017
(51) Int. Cl.: B04B 5/00, B04B 5/12, B04B 9/06, F01M 13/04

(54) **TURBINE UND FLÜSSIGKEITSABSCHEIDER**
TURBINE AND LIQUID SEPARATOR
TURBINE ET SÉPARATEUR DE LIQUIDE

(30) Priorität: 28.09.2016 DE 202016105408 U
(43) Veröffentlichungstag der Anmeldung: 07.08.2019
(73) Patentinhaber: Grimaldi Development AB, 131 26 Nacka Strand (SE)
(72) Erfinder: ZITAROSA, Francesco, 89257 Illertissen (DE); POLEDNAK, Petr, 89233 Neu-Ulm (DE); ERDMANN, Christoph, 89075 Ulm (DE)
(74) Vertreter: Fenix Legal KB
(86) Internationale Anmeldenummer: PCT/EP2017/074579
(87) Internationale Veröffentlichungsnummer: WO 2018/060303

(56) Entgegenhaltungen:
- DE-U1-202007 008 081
- DE-U1-202007 009 913

## Beschreibung

Die vorliegende Erfindung betrifft eine Turbine mit einem Turbinenrad, wie sie beispielsweise als Antrieb für aktive Ölabscheider verwendet werden, sowie einen Flüssigkeitsabscheider mit einer derartigen Turbine.

In derartigen aktiven Ölabscheidern wird oftmals ein Abscheideelement verwendet, das in Drehung versetzt wird, um einen ausreichenden Abscheidegrad einer Flüssigkeit aus einem Gas, beispielsweise von Ölnebel oder Öltröpfchen aus Blow-By-Gasen eines Verbrennungsmotors zu gewährleisten.

Derartige Turbinen weisen ein Turbinenrad auf, das mit einem fluidischen Antriebsmittel angetrieben wird. Bei Ölabscheidern in Entlüftungssystemen von Verbrennungsmotoren, insbesondere bei Fahrzeugen, wird für den Antrieb des Turbinenrades oftmals der Öldruck des Motoröls verwendet. Aber auch bei stationären Ölabscheidern kann ein hydraulischer Antrieb zum Einsatz kommen.

Ein derartiges Turbinenrad ist mit einer Welle gekoppelt bzw. zentral auf einer Welle gelagert und treibt diese Welle an, die ihrerseits mit einem drehbaren Abscheideelement gekoppelt ist. Bei im Stand der Technik üblichen aktiven Ölabscheidern, bei denen mittels des Öldrucks ein Turbinenrad angetrieben wird, wird das Antriebsfluid meist über eine Mittelbohrung in der Welle bis zum Turbinenrad geführt und dort in das Turbinenrad eingeleitet. Das Turbinenrad weist an seinem Rand eine ungefähr in tangentialer Richtung gerichtete Düse auf, über die das fluidische Antriebsmittel ausgestoßen wird. Dadurch wird das Turbinenrad in Drehung versetzt. Typisch sind dabei Drehzahlen bis zu 20.000 rpm.

Der Begriff Turbinenrad ist dabei nicht auf ein näherungsweise kreisrundes Element beschränkt, sondern umfasst auch andere Formen rotationsfähiger Körper.

Derartige Turbinenräder im Stand der Technik sind üblicherweise aus Edelstahl gefertigt. Zum Beispiel, betrifft das Gebrauchsmuster DE202007008081U einen Rotor einer Schmierölzentrifuge einer Kraftfahrzeugbrennkraftmaschine, wobei der Rotor mit einem Antriebsteil und einem Schmutzfangteil ausgeführt ist, wobei der Antriebsteil mit einem rohrförmigen Nabenteil drehbar auf einer Lagerachse der Zentrifuge gelagert ist. Dies macht das Turbinenrad schwer und insbesondere aufwändig und teuer in der Herstellung.

Weitere Versuche mit weniger komplexen Turbinenräder finden sich im Gebrauchsmuster DE202007009913U, die mit einem Turbinenrad mit einer Turbine betrifft, wie es beispielsweise als Antrieb für aktive Ölabscheider verwendet wird, und einen Flüssigkeitsabscheider mit einer solchen Turbine.

Aufgabe der vorliegenden Erfindung ist es daher, ein Turbinenrad sowie einen Fluidabscheider zur Verfügung zu stellen, die kostengünstig hergestellt werden können und ein geringes Gewicht aufweisen. Insbesondere soll die Komplexität der Herstellung verringert, das Integrationspotential erhöht und die Montage der erfindungsgemäßen Turbine vereinfacht werden. Weiterhin soll ein Flüssigkeitsabscheider zur Verfügung gestellt werden, der eine derartige erfindungsgemäße Turbine aufweist.

Erfindungsgemäß weist die Turbine nun ein Turbinenrad auf, das eine in der Drehachse des Turbinenrads verlaufende erste Bohrung aufweist. Diese erste Bohrung kann entweder als zentrale Aufnahme einer Welle dienen, so dass die Welle an dem Turbinenrad befestigt werden kann oder in Verlängerung der Aufnahme einer solchen Welle verlaufen.

Beispielsweise kann die Turbine auf die Welle aufgespritzt werden, die üblicherweise zumindest abschnittsweise aus Stahl besteht. In einer anderen Variante ist es auch möglich, die Turbine mit einer Aufnahmegeometrie für eine metallische Welle zu versehen. Ebenso ist es möglich, die Welle in das Turbinenrad einzubetten, beispielsweise warm einzubetten. Zusätzlich kann in diesem Bereich auch ein Lager für die Welle vorgesehen sein.

Das erfindungsgemäße Turbinenrad weist weiterhin einen Einlass für ein fluidisches Antriebsmittel, beispielsweise Motoröl, auf. Dieser Einlass kann beispielsweise benachbart zu der Welle, insbesondere benachbart zu deren Auslass, in dem Durchgang der Welle durch das Turbinenrad vorgesehen sein, so dass das Antriebsfluid über eine Mittelbohrung der Welle bis in den Durchlassbereich geführt und von dort über eine seitliche Bohrung in der Welle und den erfindungsgemäßen Einlass in das Turbinenrad eingebracht werden kann.

Das Turbinenrad weist dann weiterhin eine zweite Bohrung auf, die sich zwischen ihren beiden Enden zumindest abschnittsweise längs einer Sekante des Turbinenrades und bezüglich ihres Durchmessers vollständig innerhalb des Turbinenrades erstreckt. Mit anderen Worten verläuft die Bohrung bei Durchsicht in Richtung der Drehachse des Turbinenrades und durch das Turbinenrad hindurch zumindest abschnittsweise als Sekante durch das Turbinenrad, jedoch nicht durch die Drehachse des Turbinenrades hindurch (also nicht längs eines Durchmessers des Turbinenrades). Die Bohrung durchschneidet das Turbinenrad also seitlich von dessen Drehachse.

Diese Bohrung weist eine Öffnung am Umfangsrand des Turbinenrades auf. In dieser Öffnung kann in herkömmlicher Weise eine Fluiddüse angeordnet werden. Die Fluiddüse kann dabei ihrerseits unmittelbar einteilig mit dem Turbinenrad in das Material des Turbinenrads eingeformt sein, so dass die Turbine die Fluiddüse als integrales Bauelement enthält. Weiterhin weist das Turbinenrad eine dritte Bohrung auf, die sich von der ersten Bohrung des Turbinenrades, d. h. der zentralen Wellenaufnahme, bis zur zweiten Bohrung erstreckt. Diese dritte Bohrung soll so angeordnet sein, dass sie eine fluidische Verbindung zwischen dem Einlass für das fluidische Antriebsmittel und der Fluiddüse in der zweiten Bohrung ermöglicht.

Das Turbinenrad weist vorteilhafterweise genau eine Gruppe von in unmittelbarer Nähe zueinander angeordneten Fluiddüsen, insbesondere genau eine Fluiddüse auf, die am Ausgang der zweiten Bohrung angeordnet ist. Es ist vorteilhafterweise auch nur genau eine zweite Bohrung vorhanden. Die Gesamtheit von erster, zweiter und dritter Bohrung ergibt eine Fluidführung, die bezüglich eines Querschnitts durch die Mittelebene der Turbine symmetrisch sein kann, sonst aber unsymmetrisch ausgeführt ist.

Die erste, zweite und dritte Bohrung erstrecken sich vorzugsweise im Wesentlichen alle geradlinig. Dies ist insbesondere vorteilhaft bei der Herstellung des Turbinenrads im Spritzguss-, Spritzpräge- und/oder Pressverfahren. Dabei ist es auch vorteilhaft, wenn die zweite und dritte Bohrung bezüglich der Achsrichtung der Welle in derselben Ebene verlaufen oder sich an ihrem Übergang zumindest zu 50%, vorzugsweise zu 75% ihrer Erstreckung in Achsrichtung überlappen.

Ferner ist die Fluiddüse vorzugsweise so in der zweiten Bohrung angeordnet, dass eine Austrittsrichtung des fluidischen Antriebsmittels aus der Fluiddüse im Wesentlichen senkrecht zur ersten und/oder dritten Bohrung verläuft. In Einzelfällen kann es jedoch vorteilhaft sein, wenn die Austrittsrichtung einen Winkel von 85 bis 95° zur Richtung der ersten Bohrung aufweist, d.h. einen geringen Vektoranteil in Achsrichtung der Welle aufweist. Dies gilt insbesondere bei sehr hohen Drehzahlen.

Diese erfindungsgemäße Turbine mit dem erfindungsgemäßen Turbinenrad zeigt ein einfaches und kostengünstiges Design. Dadurch, dass lediglich in den Körper des Turbinenrades Bohrungen einzuformen sind, ist die Teilezahl der zur Herstellung des Turbinenrades erforderlichen Einzelteile sehr gering und damit die Komplexität des Turbinenrades stark verringert im Vergleich zum Stand der Technik.

In das erfindungsgemäße Turbinenrad kann problemlos eine Vielzahl von Zusatzfunktionen integriert werden. Beispielsweise ist es möglich, auf der Oberseite des Turbinenrades einen Stutzen vorzusehen, der die Welle abschnittsweise aufnimmt, so dass eine verbesserte Halterung der Welle in dem Turbinenrad bewirkt wird. Dieser Stutzen kann einteilig mit dem Turbinenrad gefertigt, insbesondere einteilig gespritzt werden.

Ebenso ist es möglich, auf der Ober- und/oder Unterseite des Turbinenrades einen Stutzen vorzusehen, der die Lagerung der rotierenden Bauteile ermöglicht oder die Welle zumindest abschnittsweise aufnimmt und/oder führt. Hierbei ist es besonders vorteilhaft, wenn zwischen der Welle und dem ersten Kanal der Turbine eine Trennwand, insbesondere eine integral mit der Turbine gefertigte Trennwand vorgesehen ist, so dass kein Antriebsöl zur Welle gelangen kann. Ist eine solche Trennwand vorgesehen, ist der erste Kanal dann insbesondere nicht zur Aufnahme der Welle ausgebildet, sondern verläuft in Verlängerung der Welle. Das Antriebsöl wird durch einen Leitungsabschnitt in dem Stutzen dem ersten Kanal und weiter dem zweiten Kanal zugeführt.

Auch die Montagezeit wird verkürzt durch das erfindungsgemäße Turbinenrad, wobei hierdurch auch die Montagekosten reduziert werden.

Insbesondere, das Turbinenrad wird im Leichtbau hergestellt. Hierzu besteht das Turbinenrad oder sein Gehäuse überwiegend oder vollständig aus Kunststoff. Als thermoplastische Kunststoffe kommen Polyphenylensulfid (PPS), Polyetherimid (PEI), Polyimide (PI), Polyphthalamide (PPA), Polyetheretherketon (PEEK), Polyamid (PA), Polyamidimid (PAI), Polysulfon (PSU) und/oder Liquid-Crystal Polymer (LCP) oder Kombinationen der vorgenannten Materialien besonders vorteilhaft in Frage. Sie können weiterhin mittels Fasern, wie Aramidfasern, Kohlefasern oder Glasfasern und/oder sonstigen Füllstoffen, beispielsweise partikulären Füllstoffen, wie etwa Glaskugeln oder Partikeln auf Mineralbasis verstärkt sein. Als Füllstoffe kommen insbesondere Calciumcarbonat, Calciumsulfat, Kaolin, Glimmer, Talkum und Quarz in Betracht. Ebenso können duroplastische Kunststoffe, wie Polyesterharze (UP), Vinylesterharze (VE), Epoxidharze (EP), Phenolharze (PF), Melamin-Formaldehyd-Harze (MF) eingesetzt werden. Ein derartiges Turbinenrad kann besonders einfach hergestellt werden, beispielsweise mittels Spritzguss, Spritzpräge- oder in einem Pressverfahren. Wird das Turbinenrad aus einem duroplastischen Werkstoff hergestellt, kann dies auch mittels Spritzpressen bewerkstelligt werden.

Die Herstellung ist dann besonders einfach möglich, wenn die Bohrungen keinerlei Hinterschnitte enthalten, so dass das Werkzeug einfach gestaltet werden kann.

Zur einfachen Gestaltung des Werkzeuges ist die zweite Bohrung derart vorzusehen, dass diese vom einen Umfangsrand zum anderen Umfangsrand des Turbinenrades durchgeht und so am Umfangsrand des Turbinenrades zwei gegenüberliegende Öffnungen aufweist. In ähnlicher Form kann auch die dritte Bohrung realisiert werden, wenn diese von einem Umfangsrand des Turbinenrades bis zur zweiten Bohrung reicht. Die dritte Bohrung reicht dann weiter als dies für die Ölführung allein notwendig wäre; sie weist dann an ihrem dem Übergang zur zweiten Bohrung gegenüberliegenden Ende eine Öffnung am Umfangsrand auf. Die für die Fluidführung nicht benötigte Öffnung auf einer Seite der Bohrung kann dann mit einem Verschlussmittel verschlossen werden. Als Verschlussmittel eignen sich beispielsweise Stopfen, die in der Öffnung verpresst, mit einem Schwert oder einem Schieber gesichert werden können. Ein solches Schwert oder ein solcher Schieber kann auch Teil eines anderen zur Turbine benachbarten Bauteils oder als integraler Fortsatz eines solchen ausgebildet sein. Es ist dabei weiterhin vorteilhaft, wenn das Schwert oder der Schieber von der bzw. durch die Ober- oder Unterseite der Turbine eingeführt und seitlich und/oder in der der Einführungsseite gegenüberliegenden Wandung zumindest abschnittsweise in einer Nut geführt wird. Alternativ ist ein Verschweißen des Stopfens möglich, dies kann ggf. mit anderen Schweißvorgängen zur Herstellung der Turbine kombiniert werden. Auch ein Schraubverschluss, ein Bajonettverschluss oder eine im Presssitz eingebrachte Kugel kann zum Verschluss einer Öffnung der Bohrung dienen. Dieser Verschluss sollte vorteilhafterweise fluiddicht sein, so dass in den Öffnungen von dem Fluideinlass über die dritte Bohrung bis zur zweiten Bohrung und damit bis zur Fluiddüse ein geschlossener Fluidweg zur Verfügung gestellt wird. Hierzu kann das Verschlussmittel mit einem geeigneten Abdichtmittel kombiniert werden, etwa mit einem O-Ring oder einem Flüssigdichtmittel.

Wenn das Turbinenrad aus Kunststoff hergestellt ist, können verschiedene vorteilhafte Ausgestaltungen des Turbinenrades realisiert werden.

So kann das Turbinenrad beispielsweise aus mehreren Teilen, insbesondere aus zwei Halbschalen, ausgebildet werden. Die Halb- oder Teilschalen können entweder zwei Hälften des Turbinenrades über jeweils 180° des Umfangsrandes des Turbinenrades oder auch die Oberseite und die Unterseite eines Turbinenrades sein. Die beiden Halbschalen müssen keinesfalls baugleich oder spiegelverkehrt zueinander gefertigt sein. Es kann sich auch um Teilschalen handeln, die unterschiedliche Gewichts- bzw. Volumenanteile am gesamten Turbinenrad ausmachen, es handelt sich also ggf. nur um eine Teilschale, wobei es vorteilhaft ist, wenn lediglich zwei Teilschalen zu einem Turbinenrad verbunden werden. Im Extremfall handelt es sich bei einer Halbschale nur um einen flächigen Deckel, der eine Öffnung in der anderen Halbschale verschließt. Zwischen den einzelnen Teilen, insbesondere zwischen den beiden Halbschalen des Turbinenrades kann vorteilhafterweise eine Dichtung, beispielsweise eine Gummiformdichtung angeordnet werden. Diese wird zwischen den beiden Teilen verpresst, indem beispielsweise die zwei Halbschalen miteinander verschraubt, verschweißt, verclipst oder anderweitig verbunden werden, beispielsweise analog zu einem Bajonett-Verschluss.

Das Turbinenrad kann weiterhin ein Gehäuse aufweisen, innerhalb dessen unter anderem die Bohrungen (bzw. deren Wände) und weitere Versteifungsstrukturen, einschließlich Versteifungsstege, Aussteifungsrippen und/oder Auswuchtelemente angeordnet sein können. Auswuchtelemente können dabei grundsätzlich aus demselben Material wie das Gehäuse oder das Turbinenrad hergestellt sein, es können - beispielsweise wenn dies aus Platz- und Gewichtsgründen sinnvoll ist - auch metallische oder sonstige Elemente integriert werden. Das Gehäuse kann dabei sowohl einteilig mit dem Turbinenrad als auch getrennt von dem Turbinenrad als gesondertes Bauteil ausgebildet sein. Es ist auch möglich, auf das Gehäuse zu verzichten und das Turbinenrad ausschließlich aus den Wänden der Bohrungen und ggf. derartigen Versteifungs- und/oder Gewichtausgleichsstrukturen herzustellen. Die Außenwände der Bohrungen, die Versteifungsstrukturen als auch das Gehäuse dienen sämtlich unter anderem auch der Versteifung des Turbinenrades, der Einstellung der richtigen Gewichtsverteilung (Auswuchten des Turbinenrades) und beispielsweise auch der Ölführung. Gehäuse, Versteifungsstrukturen und Bohrungen bzw. deren Wände können folglich je nach Auslegung unterschiedlich bezüglich ihrer Lage, ihrer Dicke und Form und dergleichen ausgelegt werden. Insbesondere kann die Ausgestaltung der Versteifungsstege oder der Aussteifungsrippen dem Design bezüglich Geräuschen, Schwingungen und Wärmeverteilung dienen (NVH, d.h. Noise Vibration Harshness-Optimierung). Zudem begünstigt eine Rippenstruktur das Agglomerieren und Ablaufen von Öl, insbesondere von Spritzöl.

Das Gehäuse kann jedoch auch als Halbschale ausgebildet werden, beispielsweise als Boden oder auch Deckel (Unterteil und auch als Oberteil) des Turbinenrades. Das Gehäuse kann dabei vorteilhafterweise eine glatte und/oder geschlossene Oberfläche aufweisen.

Insbesondere bei Verwendung eines Turbinenrades aus Kunststoff oder im Wesentlichen aus Kunststoff können weitere Funktionselemente, wie beispielsweise ein Magnet in das Turbinenrad eingebettet werden. Mittels eines derartigen eingebetteten Magnetes kann beispielsweise die Drehzahl des Turbinenrades erfasst werden. Weiterhin kann in das Turbinenrad ein Gleitlager eingegossen werden, so dass das Turbinenrad gemeinsam oder auch getrennt von der Welle reibungsarm in einem Ölabscheider gelagert werden kann. Die Verwendung von Kunststoff ermöglicht es auch, das Turbinenrad unmittelbar auf der Welle anzuspritzen, beispielsweise mediendicht auf einer Stahlwelle anzuspritzen. Zusätzlich oder alternativ ist eine Abdichtung mittels zusätzlicher Dichtelementen wie z.B. O-Ringen möglich.

Bei besonders vorteilhaften Ausführungsformen sind zumindest die die zweite und dritte Bohrung unmittelbar umgebenden Wände einschließlich der Austrittsdüse vollständig aus - insbesondere faserverstärktem - Kunststoff gebildet.

Im Folgenden werden einige Beispiele erfindungsgemäßer Turbinen und erfindungsgemäßer Flüssigkeitsabscheider gegeben. Dabei weisen die folgenden Beispiele neben den nach Anspruch 1 erforderlichen Merkmalen eine Vielzahl von optionalen Weiterbildungen auf, die einzeln für sich oder auch in beliebiger Kombination und auch in Kombination mit einzelnen oder einer Vielzahl von optionalen Merkmalen anderer Beispiele zur Weiterbildung der erfindungsgemäßen Turbine und des erfindungsgemäßen Flüssigkeitsabscheiders dienen können.

Im Folgenden werden für die einzelnen Beispiele für gleiche oder ähnliche Bauelemente gleiche oder ähnliche Bezugszeichen verwendet, so dass deren Beschreibung nicht immer wiederholt wird. Es zeigen:
- Figur 1: einen Vertikalschnitt durch einen erfindungsgemäßen Flüssigkeitsabscheider,
- Figuren 2A-2F: ein erstes Ausführungsbeispiel einer erfindungsgemäβen Turbine,
- Figur 3: ein zweites Ausführungsbeispiel einer erfindungsgemäβen Turbine,
- Figuren 4A, 4B: eine erfindungsgemäße Turbine gemäß einem dritten Ausführungsbeispiel,
- Figuren 5A-5D: eine erfindungsgemäße Turbine gemäß einem vierten Ausführungsbeispiel,
- Figuren 6A, 6B: eine Turbine gemäß einem fünften Ausführungsbeispiel,
- Figur 7: eine Turbine gemäß einem sechsten Ausführungsbeispiel,
- Figuren 8A, 8B: eine Turbine gemäß einem siebten Ausführungsbeispiel, die teilweise der angemeldeten Erfindung entspricht, aber für das Verständnis dieser Beschreibung nützlich sein kann;
- Figuren 9A-9C: eine Turbine gemäß einem achten Ausführungsbeispiel, die teilweise der angemeldeten Erfindung entspricht, aber für das Verständnis dieser Beschreibung nützlich sein kann; und
- Figur 10A, 10B: eineTurbine gemäß einem neunten Ausführungsbeispiel, die teilweise der angemeldeten Erfindung entspricht, aber für das Verständnis dieser Beschreibung nützlich sein kann.

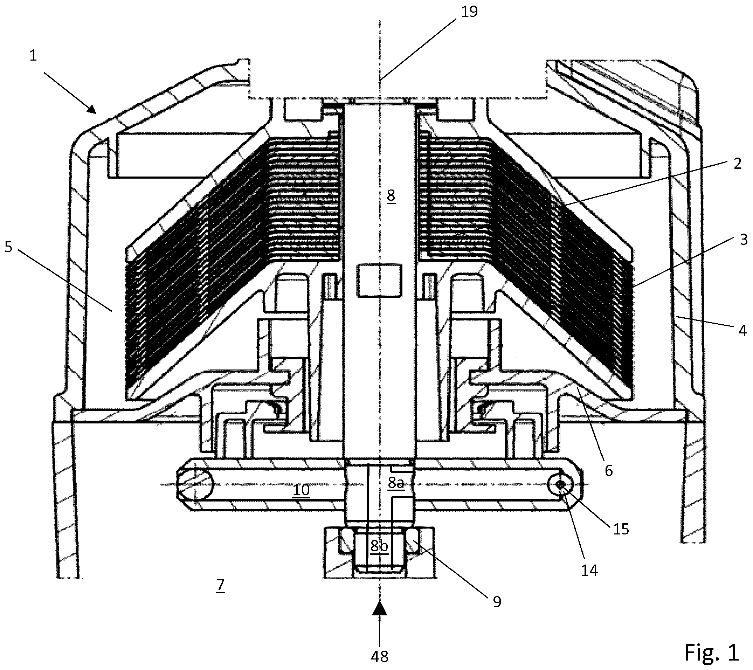

Figur 1 zeigt einen Vertikalschnitt durch einen erfindungsgemäßen Flüssigkeitsabscheider 1. Der Flüssigkeitsabscheider 1 weist ein Gehäuse 4 auf, das in eine Antriebskammer 7 und eine Abscheidekammer 5 unterteilt ist. Antriebskammer 7 und Abscheidekammer 5 sind durch eine Trennwand 6 voneinander getrennt. In der Abscheidekammer 5 ist ein Tellerseparator 2 angeordnet, der eine Vielzahl an übereinander gestapelten Tellern 3 als Abscheideelemente aufweist. Der Tellerseparator 2 ist in seiner Rotationsachse auf einer Welle 8 befestigt. Die Welle 8 erstreckt sich durch eine Öffnung in der Trennwand 6 bis in die Antriebskammer 7. In der Antriebskammer 7 ist die Welle 8 drehbar auf einem Lager 9 gelagert. In der Antriebskammer 7 ist ferner eine Turbine 10 auf der Welle 8 befestigt. Die Turbine 10 treibt den Tellerseparator 2 mittels eines Antriebsfluids, wie z.B. Motoröl, an. Beim Betrieb des Flüssigkeitsabscheiders 1 als Ölabscheider in einem Verbrennungsmotor fließt Motoröl als Antriebsfluid durch eine Mittelbohrung 8b im Inneren der Welle 8. Der Pfeil 48 deutet die Zufuhrrichtung des Motoröls an. Im Bereich der Turbine 10 tritt das Motoröl über eine seitliche Bohrung 8a in der Welle 8 aus der Welle 8 in die Turbine 10 ein, wird aufgrund der Rotation des Turbinenrades zum Umfangsrand der Turbine 10 geführt und wird durch eine in etwa in eine tangentiale Richtung gerichtete Fluiddüse 15 wieder ausgestoßen. Hierdurch wird das Turbinenrad in Rotation versetzt und dadurch der über die Welle 8 fest mit der Turbine 10 verbundene Tellerseparator 2 angetrieben.

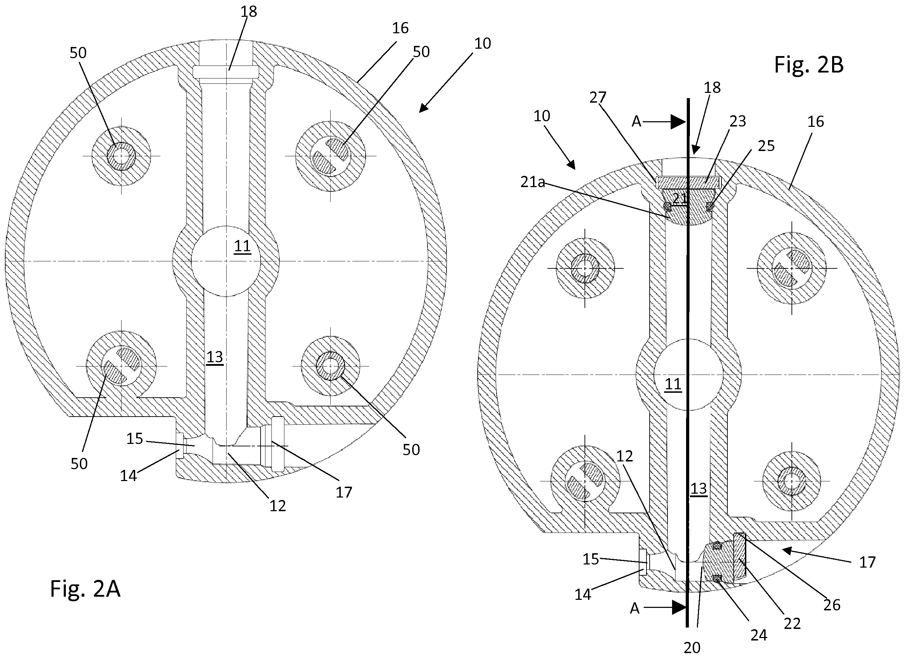

Figuren 2A bis 2F zeigen ein erstes Ausführungsbeispiel einer erfindungsgemäßen Turbine in zwei horizontalen Schnittansichten (2A, 2B), einer vertikalen Schnittansicht entlang der Linie A-A (2C), einer Seitenansicht (2D), einer Unteransicht (2E), einer Draufsicht (2F). Die Turbine 10 ist im Wesentlichen rotationssymmetrisch geformt und weist eine erste Bohrung 11 in ihrer Rotationsachse, eine zweite Bohrung 12 längs einer Sekante und eine dritte Bohrung13, welche sich ausgehend vom Umfangsrand 16 die erste Bohrung 11 schneidend bis zur zweiten Bohrung 12 erstreckt. Die zweite Bohrung weist eine erste Öffnung 14 auf, in der eine Fluiddüse angeordnet ist. Die dritte Bohrung 13 weist an einem ihrer ersten Öffnung 14 gegenüberliegenden Ende eine dritte Öffnung 18 auf. Die zweite Bohrung 12 weist an einem der Fluiddüse 15 gegenüberliegenden Ende eine zweite Öffnung 17 auf. In Figur 2A sind sämtliche dieser Öffnungen 14, 17, 18 unverschlossen. Die zweite und dritte Öffnung 17 und 18 resultieren aus dem Herstellungsverfahren, bei dem das gesamte Turbinenrad 10 als einteiliges Bauteil hergestellt ist, wobei Schieber nach der Formung des Turbinenrades 10 aus dem Turbinenrad 10 über die zweite 17 bzw. dritte Öffnung herausgezogen werden. Um einen geschlossenen Fluidweg zu erhalten müssen die zweite Öffnung 17 und die dritte Öffnung 18 nachträglich verschlossen werden. Hierzu ist in die dritte Öffnung 18 als Verschlusselement 21 ein Stopfen 21a eingesetzt, der mittels eines Schwerts 23 gesichert ist. Das Schwert 23 greift in Aussparungen 27, welche in die Wandung der dritten Bohrung 13 eingebracht sind. Zwischen dem Stopfen 21 und der Wandung der dritten Bohrung 18 ist zusätzlich eine Dichtung 25 angeordnet. Die zweite Öffnung 17 ist ebenfalls mit einem Stopfen 20 verschlossen, der mit einem Schwert 22 gesichert ist. Das Schwert 22 greift seitlich in lediglich eine Aussparung 26, die in der zur ersten Bohrung hin gelegenen Wandung eingebracht ist. Zwischen dem Stopfen 20 und der Wandung der Bohrung ist außerdem eine Dichtung 24 angeordnet.

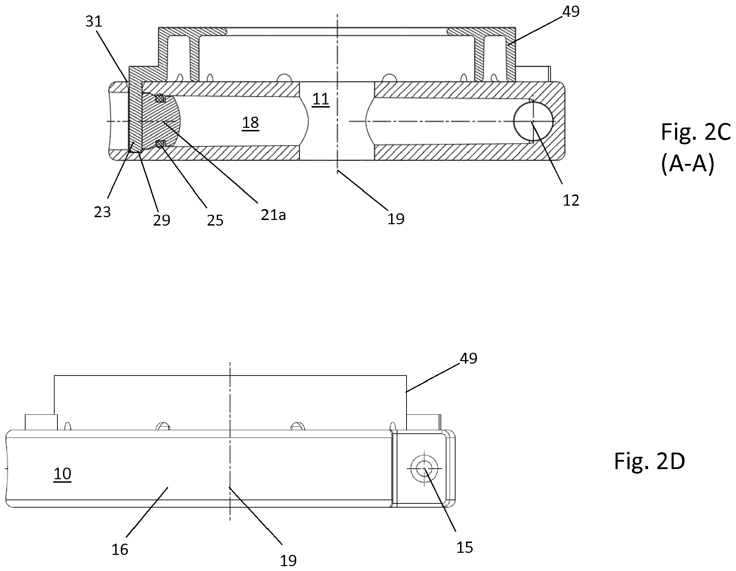

Figur 2C zeigt die Turbine 10 mit einem an der Oberseite der Turbine befestigten vereinfacht dargestellten Flügelrad 49 in einem Vertikalschnitt. Das Flügelrad 49 dient beispielsweise der Erzeugung eines Unterdrucks und/oder als Element des Abdichtsystems. Ferner ist in der Abdeckung an der Oberseite ein Schlitz 31 für das Schwert 23 der dritten Öffnung 18. Figur 2D zeigt die Turbine 10 mit dem Flügelrad 49 in einer Seitenansicht, wobei hier das Schwert 23 einteilig mit dem Flügelrad 49 gefertigt ist. Dieses Flügelrad 49 ist, wie aus Figur 2A ersichtlich, über die Zentrierungs- und Befestigungseinrichtungen 50 auf der Oberseite der Turbine 10 befestigt.

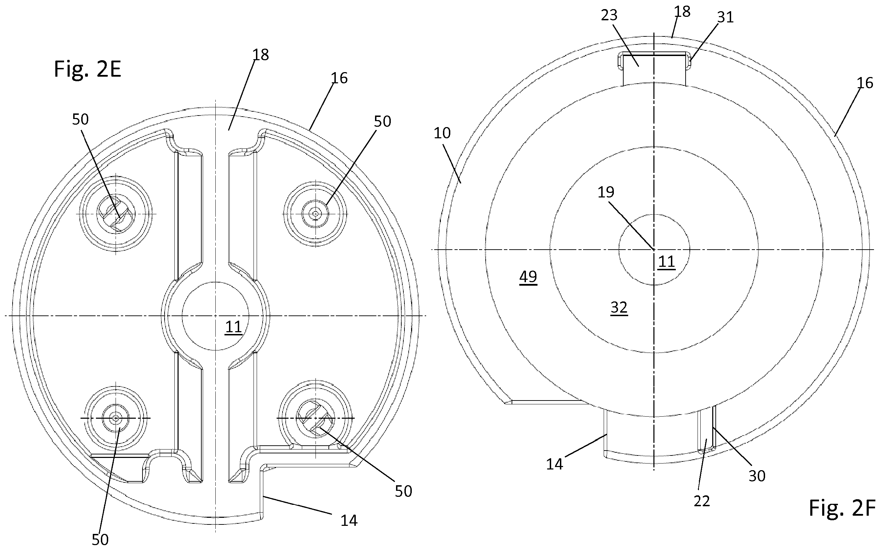

Figur 2E zeigt eine Aufsicht auf eine Unterseite der Turbine 10. Figur 2F zeigt eine Draufsicht auf die Turbine 10. Die Turbine 10 ist auf einer Oberseite mit einer im Wesentlichen geschlossenen Abdeckwand 32 ausgestattet. An der zweiten 17 und dritten Öffnung 18 befindet sich jeweils ein Schlitz 30 bzw. 31 für die Schwerter 22 und 23. Ferner ragt das Flügelrad 49 benachbart zur Düse 15 geringfügig über die Oberseite der Turbine 10 hinaus.

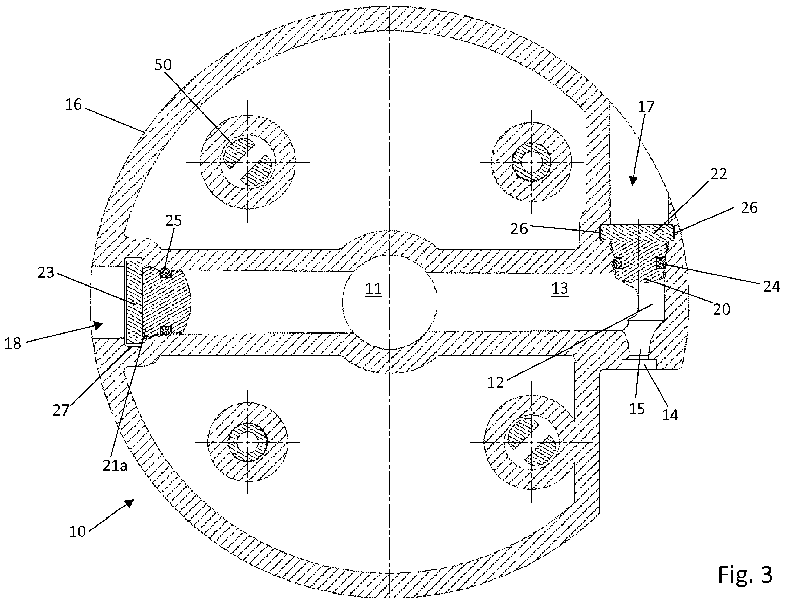

Figur 3 zeigt ein zweites Ausführungsbeispiel der erfindungsgemäßen Turbine 10 in einer horizontalen Schnittansicht. Im Unterschied zum ersten Ausführungsbeispiel ist die zweite Bohrung 12 in diesem zweiten Ausführungsbeispiel kürzer, sodass das Schwert 22 des Verschlusses der zweiten Öffnung 17 auch auf der dem Umfangsrand 16 der Turbine 10 zugewandten Seite in eine Aussparung 26 der Wandung der Bohrung 12 eingreifen kann.

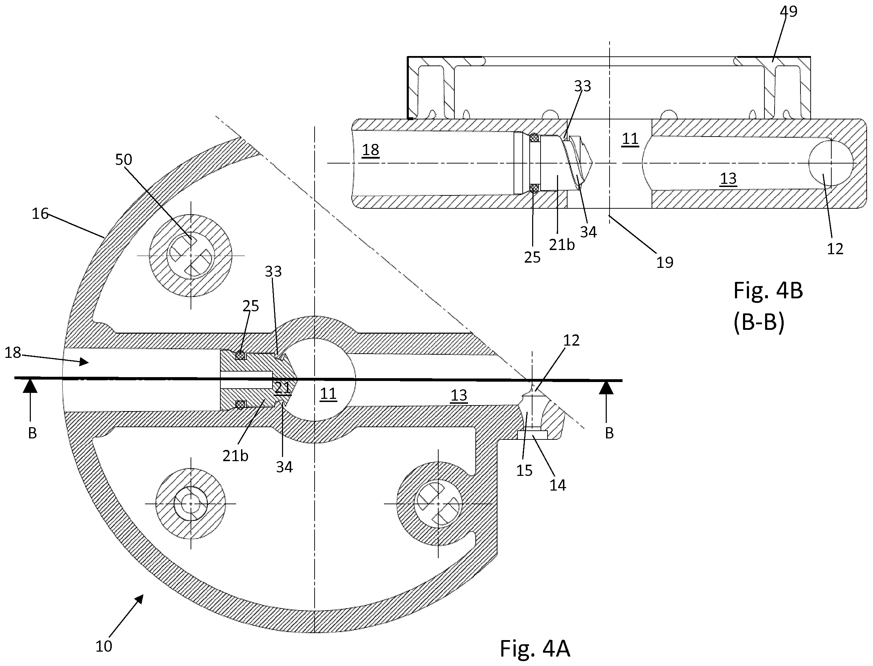

Figuren 4A und 4B zeigen ein drittes Ausführungsbeispiel der erfindungsgemäßen Turbine 10, bei dem das Turbinenrad bzw. der Kunststoffkörper des Turbinenrads aus carbonfaserverstärktem PPS hergestellt ist. Figur 4A zeigt einen Horizontalschnitt. Figur 4B zeigt einen Vertikalschnitt entlang der Linie B-B. Im Unterschied zum ersten und zweiten Ausführungsbeispiel werden die zweite und die dritte Öffnung 18 mit einem Verschlusselement 21, nämlich einem Stopfen 21b mit Bajonett-Verschluss 34 verschlossen, der in eine Aufnahmegeometrie 33 eingreift. Das Verschlusselement 21 der dritten Öffnung 18 verschließt die dritte Öffnung 18 direkt an der ersten Bohrung 11 und bildet so eine Verdrehsicherung für die Welle sowohl in axialer als auch in radialer Richtung.

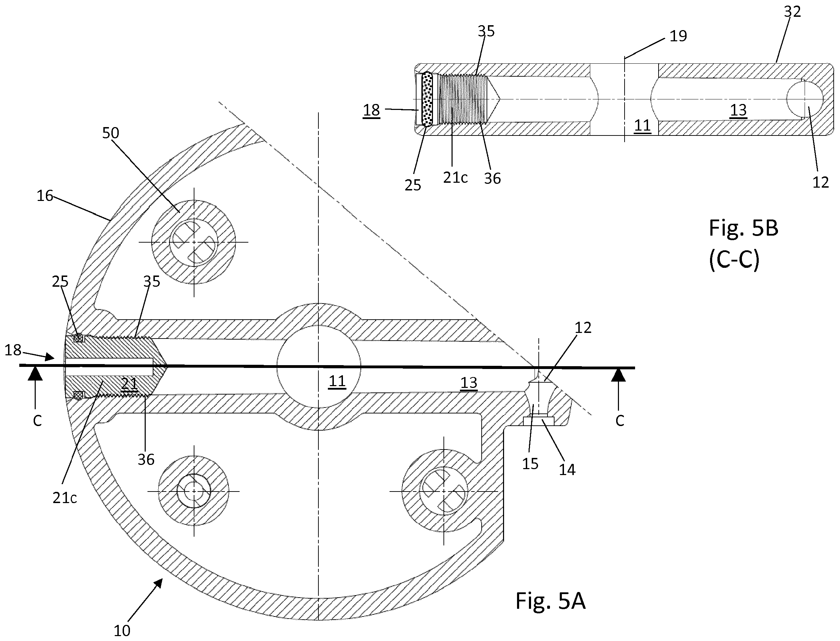

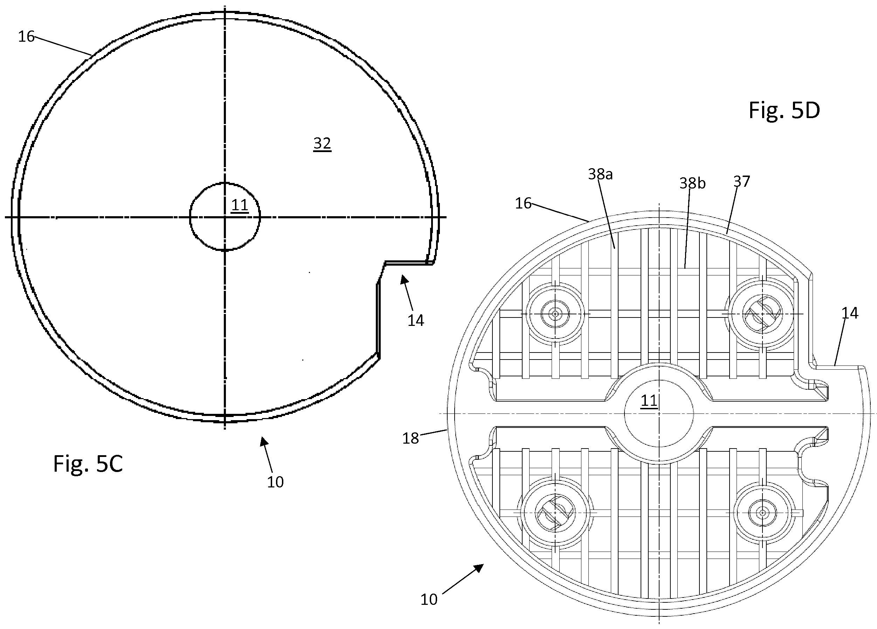

Figuren 5A bis 5D zeigen ein viertes Ausführungsbeispiel einer erfindungsgemäßen Turbine 10 in einem Horizontalschnitt, einem Vertikalschnitt sowie einer Ober- und Unteransicht. Das fünfte Ausführungsbeispiel unterscheidet sich neben der Materialwahl - hier ist glasfaserverstärktes Polyamid verwendet - lediglich im Verschlussmechanismus für die zweite 17 und die dritte Öffnung 18. Als Verschlusselement 21 ist hier eine Schraube 21c mit einem Gewinde 36 in die dritte 18 bzw. zweite 17 Öffnung eingeschraubt und bildet beim Einschrauben das Gewinde 35 in der Bohrung. Zwischen Schraube 21c und Wandung der Bohrung ist noch eine Dichtung 25 angeordnet. Der Verschluss für die zweite Öffnung 17 erfolgt analog wie in Figur 5A und 5B für die dritte Öffnung 18 gezeigt ist. Auf der Oberseite weist die Turbine eine im Wesentlichen geschlossene Abdeckung 32 auf, wie aus Figur 5C deutlich wird. Figur 5D zeigt, dass auf der Unterseite Längs- und Querrippen 38a und 38b gitterartig angeordnet sind. Zusätzlich ist auf der Unterseite der Turbine 10 auch am Umfangsrand 16 eine im Wesentlichen umlaufende Rippe 37 angeordnet. Die Rippen dienen in erster Linie der Versteifung der Turbine 10. Mittels bestimmter unregelmäßiger Anordnung der Rippen kann jedoch auch eine Unwucht der Turbine kompensiert oder eine Geräuschentwicklung reduziert werden. Zudem begünstigt die Struktur das Agglomerieren und Ablaufen von Öl.

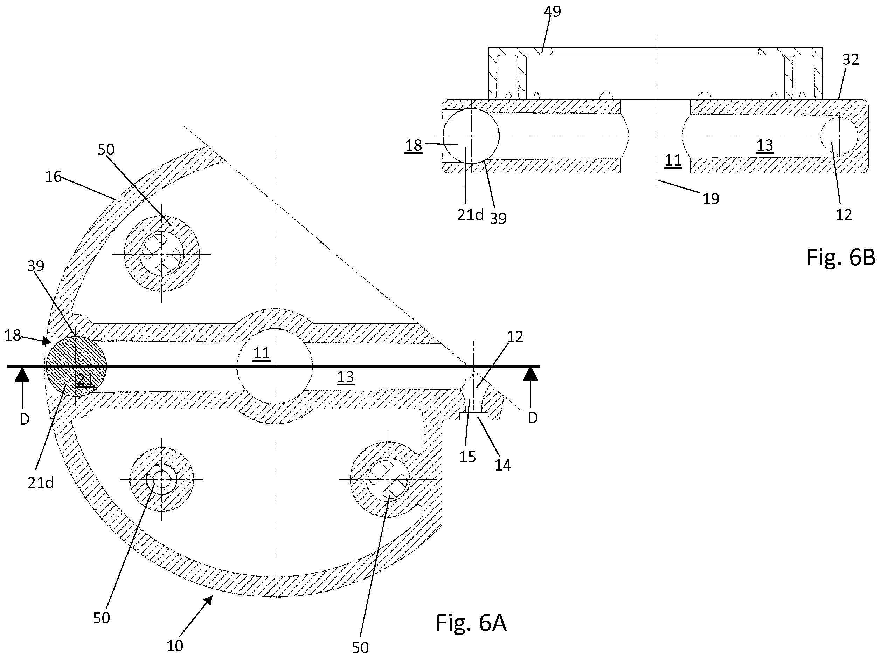

Figuren 6A und 6B zeigen ein fünftes Ausführungsbeispiel der erfindungsgemäßen Turbine 10 in einer horizontalen und einer vertikalen Schnittansicht. Das fünfte Ausführungsbeispiel unterscheidet sich von den vorhergehenden Ausführungsbeispielen in dem Verschlussmechanismus der zweiten 17 und dritten Öffnung 18. Hier werden die zweite 17 und die dritte Öffnung 18 durch eine Kugel 21d als Verschlusselement 21 im Presssitz 39 verschlossen. Es ergibt sich eine Vertiefung in der Wandung der Bohrung 12, 13, wodurch die Kugel 21d festsitzt. Der Verschluss der zweiten Öffnung 17 erfolgt analog wie für die dritte Öffnung 18 gezeigt ist.

Wie bereits angedeutet, sind die Figurengruppen 4 bis 6 dahingehend vereinfacht, dass nur der Verschluss der dritten Öffnung 18 explizit dargestellt ist, der Verschluss der zweiten Öffnung 17 ist jeweils in identischer Weise, ggf. mit Abweichungen bzgl. der Dimensionen, realisiert.

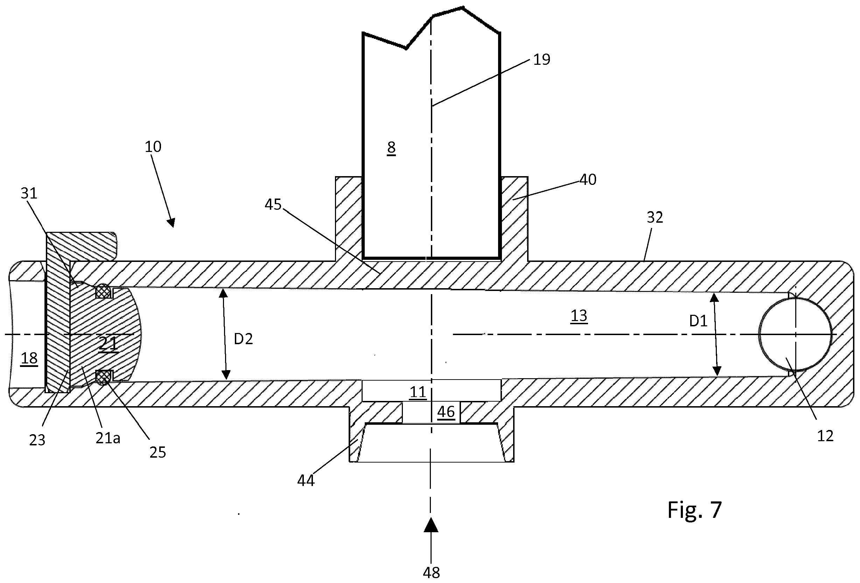

Figur 7 zeigt ein sechstes Ausführungsbeispiel einer erfindungsgemäßen Turbine 10 in einer vertikalen Schnittansicht. Dieses unterscheidet sich einerseits durch das fehlende Flügelrad vom ersten Ausführungsbeispiel, so dass auch das Schwert 23 als eigenständiges Bauteil ausgebildet ist. Anhand der beiden Doppelpfeile ist weiterhin illustriert, dass die Höhe bzw. der Durchmesser der dritten Bohrung 13 D1 im Bereich zwischen der ersten Bohrung 11 und der zweiten Bohrung 12 geringer ist als die Höhe bzw. der Durchmesser der dritten Bohrung 13 D2 im Bereich zwischen der ersten Bohrung 11 und dem Verschlusselement 21.

Die Welle 8 reicht hier nicht wie in Figur 1 durch die Turbine 10 hindurch, sondern endet in einem Stutzen 40 auf der Oberseite des Turbinenrades 10, ist dort beispielsweise formschlüssig befestigt (nicht dargestellt). Die Welle ist somit durch eine Trennwand 45 vom ersten Kanal 11 getrennt. Die Lagerung der Turbine 10 erfolgt über einen auf der Unterseite vorstehenden Stutzen 44. Der Öleintritt in den ersten Kanal 11 erfolgt durch eine Öffnung 46 auf der Unterseite des Turbinenrades, die mittig zum Stutzen 44 angeordnet ist. Dies ist oftmals vorteilhaft im Hinblick auf die Dichtigkeit zwischen Antriebsraum 7 und Abscheideraum 5.

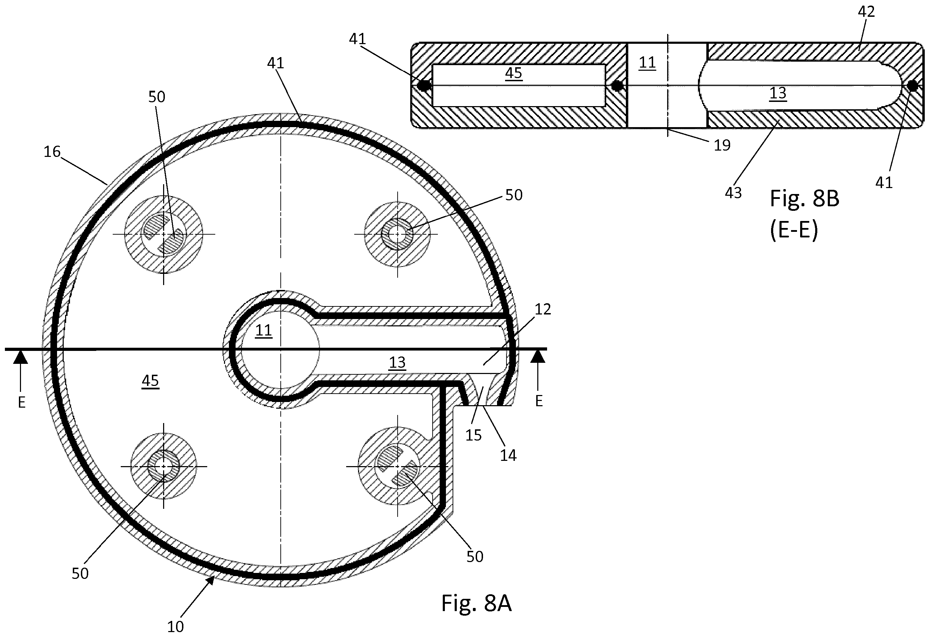

Figuren 8A und 8B zeigen ein siebtes Ausführungsbeispiel einer Turbine 10 in einer horizontalen und einer vertikalen Schnittansicht, das teilweise der angemeldeten Erfindung entspricht, aber für das Verständnis dieser Beschreibung nützlich sein kann. Die Turbine 10 ist in eine Oberschale 42 und eine Unterschale 43 unterteilt und weist zwischen den Schalen 42 und 43 ein Dichtelement 41 auf. Das Dichtelement 41 ist entlang des Umfangrandes 16 sowie entlang der Wandungen der Bohrungen 11, 12 und 13 angeordnet. Im Unterschied zu den vorhergehenden Ausführungsbeispielen reicht die dritte Bohrung 13 hier nicht von Umfangsrand 16 zu Umfangsrand 16, erstreckt sich also nicht entlang des gesamten Durchmessers, sondern nur von der ersten Bohrung 11 zur zweiten Bohrung 12. Eine komplett entlang des Durchmessers verlaufende dritte Bohrung 13 ist hier aufgrund des Vorhandenseins von Ober- 42 und Unterschale 43 nicht notwendig, da das Formwerkzeug die einzelnen Halbschalen getrennt ausbilden kann. Ebensowenig ist es hier erforderlich, dass die zweite Bohrung 12 sich über die gesamte Länge einer Sekante durch die Turbine 10 erstreckt. Vielmehr beschränkt sich die zweite Bohrung 12 auf einen kurzen Übergang zwischen dritter Bohrung 13 und Fluiddüse 15. Die Turbine 10 weist im Inneren einen Hohlraum 45 auf. Somit wird Material und Gewicht eingespart. Auf eine Darstellung von Versteifungsrippen, die im Hohlraum 45 auch einer ausgewogenen Gewichtsverteilung dienen, wurde verzichtet.

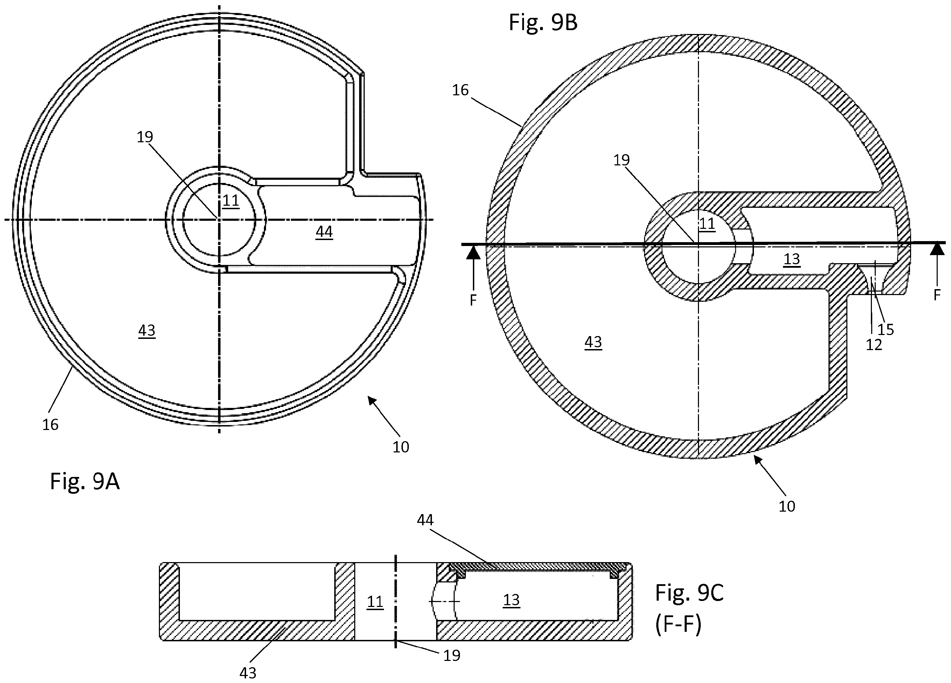

Figuren 9A bis 9C zeigen ein achtes Ausführungsbeispiel der Turbine 10 in einer Draufsicht, einer horizontalen und einer vertikalen Schnittansicht, das teilweise der angemeldeten Erfindung entspricht, aber für das Verständnis dieser Beschreibung nützlich sein kann. Wie im vorhergehenden Ausführungsbeispiel erstreckt sich die dritte Bohrung 13 lediglich von der ersten Bohrung 11 zur zweiten Bohrung 12. Ferner weist die Turbine 10 lediglich eine Unterschale 43 und im Bereich über der dritten Bohrung 13 und der zweiten Bohrung 12 eine abschnittsweise Abdeckung 44 auf. Hierdurch können ebenfalls Gewicht und Material an der Turbine 10 eingespart werden. Die Verbindung von Unterschale 43 und Abdeckung erfolgt hier permanent mittels Heißgasschweißens.

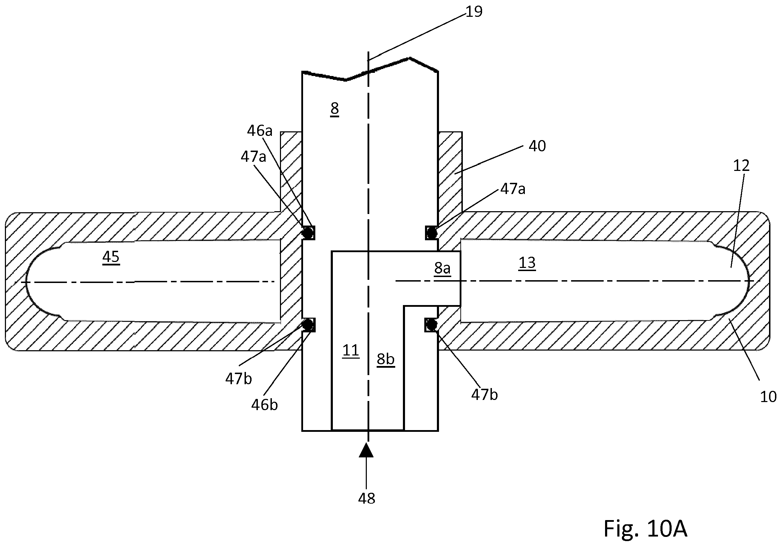

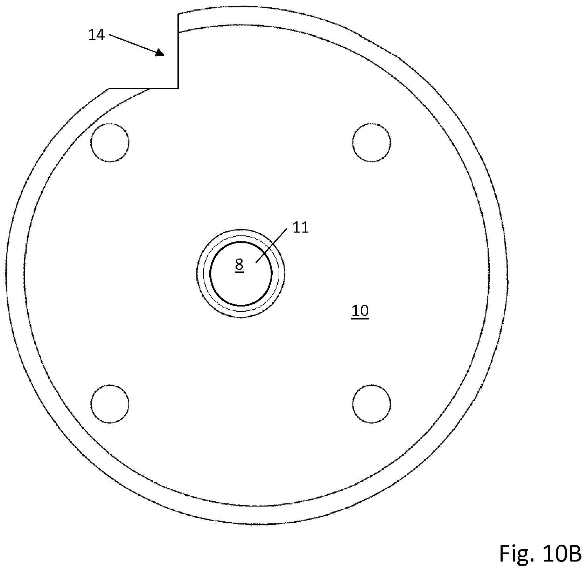

Figur 10 stellt ein neuntes Ausführungsbeispiel der Turbine 10 in einer vertikalen Schnittansicht (Figur 10A) und einer Aufsicht (Figur 10B) dar, das teilweise der angemeldeten Erfindung entspricht, aber für das Verständnis dieser Beschreibung nützlich sein kann. Die Welle 8 ist hier unmittelbar in den Kunststoffkörper der Turbine 10 eingespritzt bzw. vom Kunststoffkörper der Turbine 10 umspritzt und somit im ersten Kanal 11 aufgenommen. Dabei weist die Welle 8 auf ihrer Aussenfläche im Bereich der Turbine 10 zwei ringförmig umlaufende Nuten 46a, 46b auf, in denen jeweils ein O-Ring 47a, 47b aufgenommen ist. Beim Umspritzen wurden die Nuten 46a, 46b nicht nur verfüllt, sondern auf die O-Ringe 47a, 47b verpresst, so dass eine dichte Verbindung zwischen der Turbine 10 und der Welle 8 gegeben ist. Hier ist nun auch die Mittelbohrung 8b der Welle 8 dargestellt, durch die das Motoröl in Richtung 48 eingeführt wird. Die Mittelbohrung 8b fällt hier in den Bereich der ersten Bohrung 11. Über die Öffnung 8a in der Seitenwand der Welle 8 tritt das Motoröl in die dritte Bohrung 13 ein.

Figur 10B zeigt, dass die Außenkontur der Turbine 10 von der Außenkontur der vorhergehenden Ausführungsbeispiele abweicht. Während in den vorhergehenden Ausführungsbeispielen abgesehen von der Aussparung am Ausgang der Düse 15 eine im Wesentliche kreisrunde Außengeometrie gewählt wurde, wird hier nun eine spiralförmige Außengeometrie verwendet, d.h. die Außenumfangslinie der Turbine 10 läuft spiralförmig nach innen. Hierdurch ergibt sich auch eine außermittige Anordnung der Welle 8 bzw. der ersten Bohrung 11.

## Patentansprüche

1. Turbine (10) mit einem Turbinenrad, wobei das Turbinenrad aufweist: eine in der Drehachse (19) des Turbinenrads verlaufende erste Bohrung (11) und einen Einlass für ein fluidisches Antriebsmittel, eine in Aufsicht auf das Turbinenrad zumindest abschnittsweise längs einer Sekante und nicht durch die Drehachse des Turbinenrads verlaufende zweite Bohrung (12), und eine dritte Bohrung (13), die sich mindestens von der ersten Bohrung bis zur zweiten Bohrung erstreckt und in fluidischer Verbindung mit dem Einlass steht, die zweite Bohrung (12) eine erste Öffnung (14) am Umfangsrand des Turbinenrades aufweist, in der eine Fluiddüse (15) angeordnet ist und **dadurch gekennzeichnet dass** die zweite Bohrung (12) an ihrem der ersten Öffnung (14) entgegengesetzten Ende eine weitere Öffnung im Umfangsrand des Turbinenrads aufweist, das Turbinenrad oder sein Gehäuse aus Kunststoff und/oder faserverstärktem und/oder mit Füllstoffen gefülltem Kunststoff bestehen oder diesen enthalten, wobei als Verstärkungsfaser ein oder mehrere der folgenden Faserarten Kohlefaser, Glasfasern, Polyesterfasern, Aramidfasern verwendet werden.

2. Turbine (10) nach Anspruch 1, wobei die weitere Öffnung (18) der zweiten Bohrung mit einem Verschlussmittel (20,21), insbesondere einem Stopfen, einer Schraube, einem Stopfen mit Bajonettverschluss oder einer Kugel, fluiddicht verschlossen ist.

3. Turbine (10) nach einem der vorhergehenden Ansprüche, wobei die zweite Bohrung (12) an ihrem der ersten Öffnung (14) entgegengesetzten Ende und/oder sich die dritte Bohrung auf einer der zweiten Bohrung gegenüberliegenden Seite der ersten Bohrung bis zum Umfangsrand erstreckt und dort eine weitere Öffnung in dem Umfangsrand des Turbinenrades aufweist, die ggfls. mit einem Verschlussmittel (20,21), einschließlich eines Stopfens, einer Schraube, eines Stopfens mit Bajonettverschluss oder einer Kugel, fluiddicht verschlossen ist.

4. Turbine (10) nach einem der vorhergehenden Ansprüche, wobei sich die erste (11), zweite (12) und dritte (13) Bohrung im Wesentlichen geradlinig erstrecken.

5. Turbine (10) nach einem der vorhergehenden Ansprüche, wobei eine Austrittsrichtung des fluidischen Antriebsmittels aus der Fluiddüse (15) im Wesentlichen senkrecht zur ersten (11) und/oder dritten (13) Bohrung verläuft.

6. Turbine (10) nach einem der vorhergehenden Ansprüche, wobei die Fluiddüse (15) einteilig mit dem Turbinenrad in das Turbinenrad eingeformt ist.

7. Turbine (10) nach einem der vorhergehenden Ansprüche, wobei das Turbinenrad aus zwei Halbschalen ausgebildet ist, die längs einer Ebene quer zur Drehachse (19) des Turbinenrades oder quer zur Erstreckungsrichtung der zweiten Bohrung (12) zum Turbinenrad zusammengefügt sind.

8. Turbine (10) nach einem der vorhergehenden Ansprüche, wobei auf der Oberseite des Turbinenrades weitere funktionelle Bauteile, einschließlich eines Flügelrades (49) oder eines Dichtelements, angeordnet sind.

9. Turbine (10) nach einem der vorhergehenden Ansprüche, wobei Versteifungsstege und/oder Aussteifungsrippen (37,38) außerhalb der Bohrungen angeordnet sind.

10. Turbine (10) nach einem der vorhergehenden Ansprüche, wobei das Turbinenrad ein Gehäuse aufweist, wobei gegebenenfalls innerhalb des Gehäuses Versteifungsstrukturen, einschließlich Versteifungsstege und/oder Aussteifungsrippen (37,38), angeordnet sind.

11. Turbine (10) nach dem vorhergehenden Anspruch, wobei der Kunststoff Polyphenylensulfide (PPS), Polyetherimide (PEI), Polyimide (PI), Polyphthalamide (PPA), Polyetheretherketon (PEEK), Polyamid (PA), Polyesterharz (UP), Vinylesterharz (VE), Epoxidharz (EP), Phenolharz (PF), Melamin- Formaldehyd-Harze (MF) oder eine Kombination der vorgenannten Materialien ist oder enthält.

12. Turbine (10) nach einem der vorhergehenden Ansprüche, wobei das Turbinenrad und/oder sein Gehäuse teilweise oder vollständig mittels eines Spritzguss-, Spritzpräge- und/oder eines Spritzpressverfahrens und/oder mittels Pressverarbeitung herstellbar ist.

13. Flüssigkeitsabscheider (1) zur Abscheidung von Flüssigkeitströpfchen und/odernebel, insbesondere von Öltröpfchen und/oder -nebel, aus einem Gas, einschließlich Blow-By-Gasen eines Verbrennungsmotors, mit einem drehbar gelagerten Abscheideelement (2) und einem Antriebselement zum drehbaren Antrieb des Abscheideelementes, **dadurch gekennzeichnet, dass** das Antriebselement eine Turbine (10) nach einem der vorhergehenden Ansprüche aufweist.

## Claims

1. Turbine (10) with a turbine wheel, the turbine wheel having: a first bore (11) running in the axis of rotation (19) of the turbine wheel and an inlet for a fluid drive means, which, when viewed from above the turbine wheel, runs at least in sections along a secant and not through the second bore (12) running along the axis of rotation of the turbine wheel, and a third bore (13), which extends at least from the first bore to the second bore and is in fluid communication with the inlet, the second bore (12) has a first opening (14) on the peripheral edge of the turbine wheel, in which a fluid nozzle (15) is arranged and **characterized in that** the second bore (12) at its end opposite the first opening (14) has a further opening in the peripheral edge of the turbine wheel, the turbine wheel or its housing made of or containing plastic and/or fiber-reinforced and/or plastic filled with fillers, with one or more of the following types of fibers carbon fiber, glass fibers, polyester fibers, aramid fibers being used as the reinforcing fiber.

2. Turbine (10) according to claim 1, wherein the further opening (18) of the second bore is closed in a fluid-tight manner with a closure means (20, 21), in particular a plug, a screw, a plug with a bayonet lock or a ball.

3. Turbine (10) according to one of the preceding claims, wherein the second bore (12) extends at its end opposite the first opening (14) and/or the third bore extends to the peripheral edge on a side of the first bore opposite the second bore and there has a further opening in the peripheral edge of the turbine wheel, which if necessary is closed in a fluid-tight manner with a closure means (20, 21), including a plug, a screw, a plug with a bayonet lock or a ball.

4. Turbine (10) according to one of the preceding claims, wherein the first (11), second (12) and third (13) bores extend substantially in a straight line.

5. Turbine (10) according to one of the preceding claims, wherein an exit direction of the fluidic drive means from the fluid nozzle (15) runs essentially perpendicular to the first (11) and/or third (13) bore.

6. Turbine (10) according to one of the preceding claims, wherein the fluid nozzle (15) is integrally formed with the turbine wheel in the turbine wheel.

7. Turbine (10) according to one of the preceding claims, wherein the turbine wheel is formed from two half-shells which are joined together along a plane transverse to the axis of rotation (19) of the turbine wheel or transverse to the direction of extension of the second bore (12) to form the turbine wheel.

8. Turbine (10) according to one of the preceding claims, wherein further functional components, including an impeller (49) or a sealing element, are arranged on the top of the turbine wheel.

9. Turbine (10) according to one of the preceding claims, wherein stiffening webs and/or stiffening ribs (37, 38) are arranged outside the bores.

10. Turbine (10) according to one of the preceding claims, wherein the turbine wheel has a housing, with stiffening structures, including stiffening webs and / or stiffening ribs (37, 38), optionally being arranged within the housing.

11. Turbine (10) according to the preceding claim, wherein the plastic is polyphenylene sulfide (PPS), polyetherimides (PEI), polyimides (PI), polyphthalamides (PPA), polyether ether ketone (PEEK), polyamide (PA), polyester resin (UP), vinyl ester resin (VE), epoxy resin (EP), phenolic resin (PF), melamineformaldehyde resins (MF) or a combination of the aforementioned materials.

12. Turbine (10) according to one of the preceding claims, wherein the turbine wheel and / or its housing can be produced partially or completely by means of an injection molding, injection compression and / or a transfer molding process and / or by means of press processing.

13. Liquid separator (1) for separating liquid droplets and/or mist, in particular oil droplets and/or mist, from a gas, including blow-by gases from an internal combustion engine, with a rotatably mounted separating element (2) and a drive element for rotatable drive of the separating element, **characterized in that** the drive element has a turbine (10) according to one of the preceding claims.

## Revendications

1. Turbine (10) avec une roue de turbine, la roue de turbine comportant : un premier alésage (11) s'étendant dans l'axe de rotation (19) de la roue de turbine et une entrée pour un moyen d'entraînement de fluide qui, vu du dessus de la turbine roue, s'étend au moins par sections le long d'une sécante et non à travers le deuxième alésage (12) s'étendant le long de l'axe de rotation de la roue de turbine, et un troisième alésage (13) qui s'étend au moins du premier alésage au deuxième alésage et est en communication fluidique avec l'entrée, le deuxième alésage (12) présente une première ouverture (14) sur le bord périphérique de la roue de turbine, dans laquelle est disposée une buse à fluide (15) et **caractérisé en ce que** le deuxième alésage (12) présente à son extrémité opposée à la première ouverture (14) une autre ouverture dans le bord périphérique de la roue de turbine, la roue de turbine ou son boîtier en ou contenant du plastique et/ou du plastique renforcé de fibres et/ou du plastique rempli de charges, avec un ou plusieurs des types de fibres suivants: fibre de carbone, fibres de verre, fibres de polyester, fibres d'aramide étant utilisés comme fibre de renforcement.

2. Turbine (10) selon la revendication 1, dans laquelle l'autre ouverture (18) du deuxième alésage est fermée de manière étanche aux fluides par un moyen de fermeture (20, 21), notamment un bouchon, une vis, un bouchon à baïonnette ou une bille.

3. Turbine (10) selon l'une des revendications précédentes, dans laquelle le deuxième alésage (12) s'étend à son extrémité opposée à la première ouverture (14) et/ou le troisième alésage s'étend jusqu'au bord périphérique d'un côté du premier alésage opposé à la deuxième alésage et il y a une autre ouverture dans le bord périphérique de la roue de turbine, qui si nécessaire est fermé de manière étanche aux fluides avec un moyen de fermeture (20, 21), comprenant un bouchon, une vis, un bouchon à baïonnette ou une bille.

4. Turbine (10) selon l'une des revendications précédentes, dans laquelle les premier (11), deuxième (12) et troisième (13) alésages s'étendent sensiblement selon une ligne droite.

5. Turbine (10) selon l'une des revendications précédentes, dans laquelle une direction de sortie des moyens d'entraînement fluidique depuis la buse à fluide (15) s'étend essentiellement perpendiculairement au premier (11) et/ou au troisième (13) alésage.

6. Turbine (10) selon l'une des revendications précédentes, dans laquelle la buse fluide (15) est solidaire de la roue de turbine dans la roue de turbine.

7. Turbine (10) selon l'une des revendications précédentes, dans laquelle la roue de turbine est formée de deux demi-coquilles qui sont réunies selon un plan transversal à l'axe de rotation (19) de la roue de turbine ou transversal à la direction d'extension du deuxième alésage (12) pour former la roue de turbine.

8. Turbine (10) selon l'une des revendications précédentes, dans laquelle d'autres composants fonctionnels, notamment une roue (49) ou un élément d'étanchéité, sont disposés sur le dessus de la roue de turbine.

9. Turbine (10) selon l'une des revendications précédentes, dans lequel des âmes de raidissement et/ou des nervures de raidissement (37, 38) sont disposées à l'extérieur des alésages.

10. Turbine (10) selon l'une des revendications précédentes, dans laquelle la roue de turbine présente un carter, avec des structures de rigidification, notamment des âmes de rigidification et/ou des nervures de rigidification (37, 38), étant éventuellement disposées à l'intérieur du carter.

11. Turbine (10) selon la revendication précédente, dans laquelle le plastique est du sulfure de polyphénylène (PPS), des polyétherimides (PEI), des polyimides (PI), des polyphtalamides (PPA), du polyéther éther cétone (PEEK), du polyamide (PA), du polyester, résine (UP), résine vinylester (VE), résine époxy (EP), résine phénolique (PF), résines mélamine-formaldéhyde (MF) ou une combinaison des matériaux susmentionnés.

12. Turbine (10) selon l'une des revendications précédentes, dans laquelle la roue de turbine et/ou son carter peuvent être réalisés partiellement ou totalement au moyen d'un moulage par injection, injection compression et/ou d'un procédé de moulage par transfert et/ou au moyen du traitement de la presse.

13. Séparateur de liquide (1) pour séparer des gouttelettes et/ou des brouillards de liquide, en particulier des gouttelettes et/ou des brouillards d'huile, d'un gaz, y compris les gaz de soufflage d'un moteur à combustion interne, avec un élément de séparation (2) monté rotatif et un élément d'entraînement pour l'entraînement en rotation de l'élément de séparation, **caractérisé en ce que** l'élément d'entraînement présente une turbine (10) selon l'une des revendications précédentes.
